# EUROPEAN PATENT APPLICATION

(11) **EP 2 661 031 A1**
(43) Date of publication of application: **06.11.2013**
(21) Application number: 11852518.7
(22) Date of filing: 29.12.2011
(51) Int. Cl.: H04L 25/02

(54) **METHOD AND MOBILE TERMINAL FOR IMPROVING ANTENNA MATCHING PERFORMANCE OF MULTI-BAND MOBILE TERMINAL**

(30) Priority: 30.12.2010 CN 201010623664
(71) Applicant: ST-Ericsson Semiconductor (Beijing) Co., Ltd., Beijing 100088 (CN)
(72) Inventor: ZHANG, Shifang, Beijing 100101 (CN); LI, Jishui, Beijing 102208 (CN)
(74) Representative: Ström & Gulliksson AB
(86) International application number: PCT/CN2011/084891
(87) International publication number: WO 2012/089138

(57) **Abstract**

The present invention relates to the communication field and provides a method and multi-band mobile terminal for improving matching performance of an antenna of a multi-band mobile terminal. This invention is used for improving the matching performance of the antenna of the multi-band mobile terminal sharing one antenna. The mobile terminal may comprise a RF front-end coupler and an antenna. The mobile terminal may comprise a plurality of matching circuits, and a first matching circuit of the plurality of matching circuits may be connected between the RF front-end coupler and the antenna of the mobile terminal. The method may comprise: obtaining working parameters of the mobile terminal; selecting a matching circuit from the plurality of matching circuits according to the working parameters of the mobile terminal; connecting the selected matching circuit between the RF front-end coupler and the antenna of the mobile terminal to replace the first matching circuit, so as to improve matching performance of the antenna. The present invention is capable of improving the matching performance of the antenna of the multi-band mobile terminal sharing one antenna.

## Description

### BACKGROUND OF THE INVENTION

### FIELD OF THE INVENTION

The present application relates to a mobile communication field, and more particularly to a method and mobile terminal for improving matching performance of an antenna of a multi-band mobile terminal.

### DESCRIPTION OF THE PRIOR ART

In recent years, more bands are required to be supported by a mobile terminal along with the rapid development of the mobile communication technology. To make a mobile phone as an example, most mobile phones adopt one antenna in consideration of reducing the size of the PCB and lowering the cost. One antenna capable of covering so many working bands has to compromise on the transmitting and receiving performances of some of the working bands.

Generally, the RF transceiver in the mobile phone is designed with regard to 50 ohm impedance, and thus the best performance of the antenna in the whole band reflects 50 ohm impedance. However, it is in fact hardly to be implemented because the mobile phone has the inherent characteristics of narrow antenna bandwidth, poor matching and low radiation efficiency according to the laws of electromagnetism. As a result, the antenna in the whole band is usually designed with regard to the impedance whose value is not 50 ohm.

On the other hand, the range of the application band being supported by the antenna of the mobile phone is required to be wider and wider along with the extensive use of the multi-mode multi-band mobile phones, which leads to that the antenna cannot have good matches in all covering bands.

### SUMMARY OF THE INVENTION

A technical problem to be solved by the present invention lies in providing a method and mobile terminal for improving matching performance of an antenna of a multi-band mobile terminal, which can improve the matching performance of the antenna of the mobile terminal that shares one antenna in different bands.

To solve the above technical problem, the embodiments of the present invention provides the following technical solutions:

On one hand, a method for improving matching performance of an antenna of a multi-band mobile terminal is provided. The mobile terminal comprises a RF (Radio Frequency) front-end coupler and an antenna; the antenna works at different standards and different bands of a same standard; the mobile terminal comprises a plurality of matching circuits; and a first matching circuit of the plurality of matching circuits is connected between the RF front-end coupler and the antenna of the mobile terminal. The method may comprise:

step 1: obtaining working parameters of the mobile terminal;

step 2: selecting a matching circuit from the plurality of matching circuits according to the working parameters of the mobile terminal; and

step 3: connecting the selected matching circuit between the RF front-end coupler and the antenna of the mobile terminal to replace the first matching circuit, so as to improve the matching performance of the antenna.

The step 1 may specifically comprise: obtaining a current working band of the antenna;

The step 2 may specifically comprise: selecting a matching circuit that corresponds to a pre-set working band from the plurality of matching circuits according to a correspondence between the working band and the matching circuit.

Here, before the step 1, the method may further comprise: determining whether the antenna of the mobile terminal is in a state of mismatching according to a first reflection coefficient value of the first matching circuit;

the step 1 may specifically comprise: obtaining a reflection coefficient value when the mobile terminal respectively selects each one of the plurality of matching circuits if the antenna is in the state of mismatching;

the step 2 may specifically comprise: selecting a matching circuit from the plurality of matching circuits, so that a second refection coefficient value after connecting the selected matching circuit between the coupler and the antenna is smaller than a first predetermined value.

Before the step 1, the method may further comprise: determining whether the antenna of the mobile terminal is in a state of mismatching according to a first reflection coefficient value of the first matching circuit;

the step 1 may specifically comprise: obtaining a reflection coefficient value when the mobile terminal respectively selects each one of the plurality of matching circuits if the antenna is in the state of mismatching;

the step 2 may specifically comprise: selecting a matching circuit from the plurality of matching circuits, so that a second refection coefficient value after connecting the selected matching circuit between the coupler and the antenna is the smallest one among all reflection coefficient values after respectively connecting each one of the plurality of matching circuits between the coupler and the antenna.

The step of determining whether the antenna of the mobile terminal is in the state of mismatching according to the first reflection coefficient value of the first matching circuit may comprise:

obtaining a forward transmission power and a backward reflection power fed back by the coupler;

calculating the first reflection coefficient value according to the forward transmission power and the backward reflection power;

determining that the antenna is in the state of matching if the first reflection coefficient value is less than or equal to the first predetermined value;

determining that a connection state of the antenna is abnormal if the first reflection coefficient value is greater than or equal to a second predetermined value, wherein the second predetermined value is greater than the first predetermined value;

determining that the antenna is in the state of mismatching if the first reflection coefficient value is less than the second predetermined value and greater than the first predetermined value.

The step of obtaining the reflection coefficient value when the mobile terminal respectively selects each one of the plurality of matching circuits if the antenna is in the state of mismatching may specifically comprise:

determining whether the mobile terminal is in the state of being idle when the antenna is in the state of mismatching;

if the mobile terminal is in the state of being idle, obtaining the reflection coefficient value when the mobile terminal respectively selects each one of the plurality of matching circuits.

On the other hand, a mobile terminal comprising a RF front-end coupler and an antenna is provided. The antenna works at different standards and different bands of a same standard; the mobile terminal comprises a plurality of matching circuits, and a first matching circuit of the plurality of matching circuits is connected between the RF front-end coupler and the antenna of the mobile terminal. The mobile terminal may further comprise:

an obtaining unit, being configured for obtaining working parameters of the mobile terminal;

a selecting unit, being configured for selecting a matching circuit from the plurality of matching circuits according to the working parameters of the mobile terminal;

a control unit, being configured for connecting the selected matching circuit between the RF front-end coupler and the antenna of the mobile terminal to replace the first matching circuit, so as to improve matching performance of the antenna.

The obtaining unit may be specifically configured for: obtaining a current working band of the antenna;

the selecting unit may be specifically configured for: selecting a matching circuit that corresponds to a pre-set working band from the plurality of matching circuits according to a correspondence between the working band and the matching circuit.

The mobile terminal may further comprise:

a determining unit, being configured for determining whether the antenna of the mobile terminal is in a state of mismatching according to a first reflection coefficient value of the first matching circuit;

The obtaining unit may be specifically configured for: obtaining a reflection coefficient value when the mobile terminal selects a different matching circuit if the antenna is in the state of mismatching;

The selecting unit may be specifically configured for: selecting a matching circuit from the plurality of matching circuits, so that a second refection coefficient value after connecting the selected matching circuit between the coupler and the antenna is the smallest one among all reflection coefficient values after respectively connecting each one of the plurality of matching circuits between the coupler and the antenna.

The determining unit may comprise:

an obtaining sub-unit, being configured for obtaining a forward transmission power and a backward reflection power fed back by the coupler;

a calculating sub-unit, being configured for calculating the first reflection coefficient value according to the forward transmission power and the backward reflection power;

a determining sub-unit, being configured for determining that the antenna is in the state of matching if the first reflection coefficient value is less than or equal to the first predetermined value; determining that a connection state of the antenna is abnormal if the first reflection coefficient value is greater than or equal to a second predetermined value, wherein the second predetermined value is greater than the first predetermined value; determining that the antenna is in the state of mismatching if the first reflection coefficient value is less than the second predetermined value and greater than the first predetermined value.

The embodiments of the present invention have the following advantageous effect:

In the above technical solutions, when the mobile terminal shares one antenna in different bands, the first matching circuit of the plurality of matching circuits may be connected between the RF front-end coupler and the antenna of the mobile terminal. The mobile terminal may select a matching circuit from the plurality of matching circuits according to the working parameters of the mobile terminal. The selected matching circuit may be connected between the RF front-end coupler and the antenna of the mobile terminal to replace the first matching circuit, so as to improve the matching performance of the antenna.

### BRIEF DESCRIPTION OF THE DRAWINGS

Fig. 1 is a flow chart illustrating a method for improving the matching performance of the antenna of a multi-band mobile terminal according to the present invention;

Fig. 2 is a flow chart illustrating an embodiment of the method for improving the matching performance of the antenna of the multi-band mobile terminal according to the present invention;

Fig. 3 is a structure diagram of the mobile terminal according to the present invention;

Fig. 4 is a structure diagram illustrating an application scenario of the mobile terminal according to the present invention; and

Fig. 5 is a flow chart illustrating an application scenario of the method for improving the matching performance of the antenna of the multi-band mobile terminal according to the present invention.

### DETAILED DESCRIPTION OF THE PREFERRED EMBODIMENTS

In the following, the present invention will be described in details in connection with the figures and the specific embodiments to further clarify technical problems to be solved by the embodiments of the present application, technical solutions and their advantages.

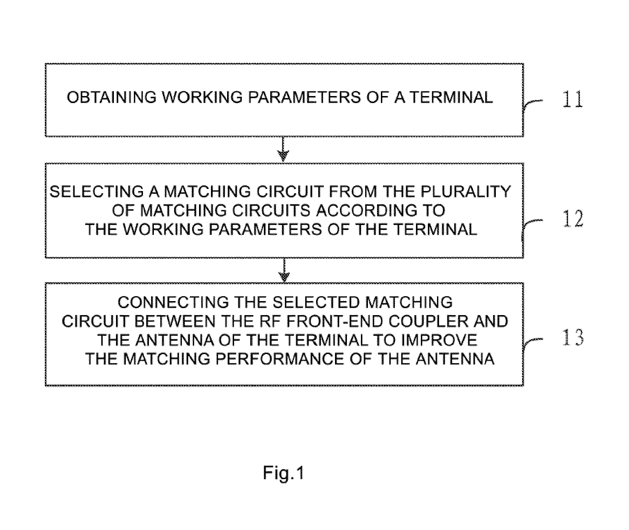

As illustrated in Fig.1, provided is a method for improving the matching performance of an antenna of a multi-band mobile terminal according to the present invention. The mobile terminal may comprise a RF (Radio Frequency) front-end coupler and an antenna. The antenna may work at different standards and different bands of a same standard; and the mobile terminal may comprise a plurality of matching circuits; and a first matching circuit of the plurality of matching circuits may be connected between the RF front-end coupler and the antenna of the mobile terminal. The method may comprise:

Step 11: obtaining working parameters of the mobile terminal;

Step 12: selecting a matching circuit from the plurality of matching circuits according to the working parameters of the mobile terminal;

Step 13: connecting the selected matching circuit between the RF front-end coupler and the antenna of the mobile terminal to replace the first matching circuit, so as to improve the matching performance of the antenna.

In the above solution, when the mobile terminal working at different bands shares one antenna, the solution may select a matching circuit from the plurality of matching circuits according to the working parameters of the mobile terminal; and connect the selected matching circuit between the RF front-end coupler and the antenna of the mobile terminal to replace the first matching circuit, so as to improve the matching performance of the antenna.

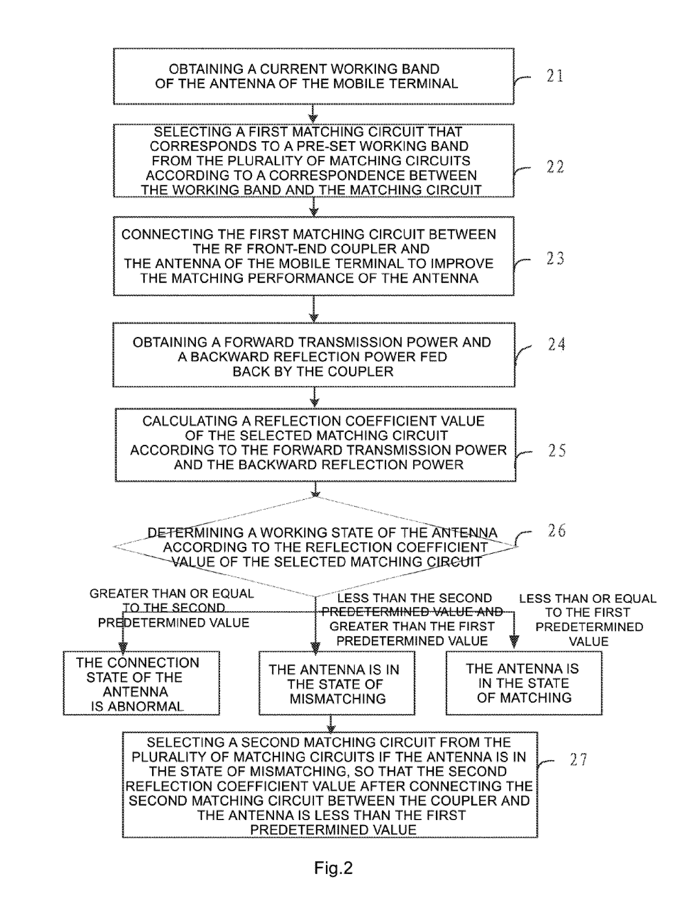

As illustrated in Fig. 2, provided is an embodiment of the method for improving the matching performance of an antenna of a multi-band mobile terminal according to the present invention. The mobile terminal may comprise a RF front-end coupler and an antenna. The antenna may work at different standards and different bands of a same standard; and the mobile terminal may comprise a plurality of matching circuits; and a first matching circuit of the plurality of matching circuits may be connected between the RF front-end coupler and the antenna of the mobile terminal. The method may comprise:

Step 21: obtaining a current working band of the antenna of the mobile terminal;

Step 22: selecting a matching circuit that corresponds to a pre-set working band from the plurality of matching circuits according to a correspondence between the working band and the matching circuit. Here, the correspondence between the working band and the matching circuit may be determined by experiments in advance. In the present invention, firstly, one of the plurality of the matching circuits may be set to be a default working circuit, and then the default working circuit may be switched to the selected matching circuit.

Step 23: connecting the selected matching circuit between the RF front-end coupler and the antenna of the mobile terminal to replace the first matching circuit, so as to improve the matching performance of the antenna.

The method for improving the matching performance of the antenna of the multi-band mobile terminal may further comprise:

Step 24: obtaining a forward transmission power and a backward reflection power fed back by the coupler;

Step 25: calculating a reflection coefficient value of the selected matching circuit according to the forward transmission power and the backward reflection power;

Step 26: determining a working state of the antenna according to the reflection coefficient value of the selected matching circuit. Specifically, this step may comprise:

Step 261: determining that a connection state of the antenna is abnormal if the reflection coefficient value of the selected matching circuit is greater than or equal to a second predetermined value;

Step 262: determining that the antenna is in a state of matching if the reflection coefficient value of the selected matching circuit is less than or equal to a first predetermined value, wherein the second predetermined value is greater than the first predetermined value;

Step 263: determining that the antenna is in a state of mismatching if the reflection coefficient value of the selected matching circuit is less than the second predetermined value and greater than the first predetermined value.

The method for improving the matching performance of the antenna of the multi-band mobile terminal may further comprise:

Step 27: selecting a second matching circuit from the plurality of matching circuits if the antenna is in the state of mismatching, so that the second reflection coefficient value after connecting the second matching circuit between the coupler and the antenna is less than the reflection coefficient value of the selected matching circuit.

Preferably, the step 27 may specifically comprise: determining whether the mobile terminal is in an idle timeslot when the antenna is in the state of mismatching; and if the mobile terminal is in an idle timeslot, selecting the second matching circuit from the plurality of matching circuits, so that the second reflection coefficient value after connecting the second matching circuit between the coupler and the antenna is smaller than the first predetermined value.

Preferably, the step 27 may specifically comprise: determining whether the mobile terminal is in an idle timeslot when the antenna is in the state of mismatching; and if the mobile terminal is in an idle timeslot, selecting the second matching circuit from the plurality of matching circuits, so that the second reflection coefficient value after connecting the second matching circuit between the coupler and the antenna is the smallest one among all reflection coefficient values after respectively connecting each one of the plurality of matching circuits between the coupler and the antenna.

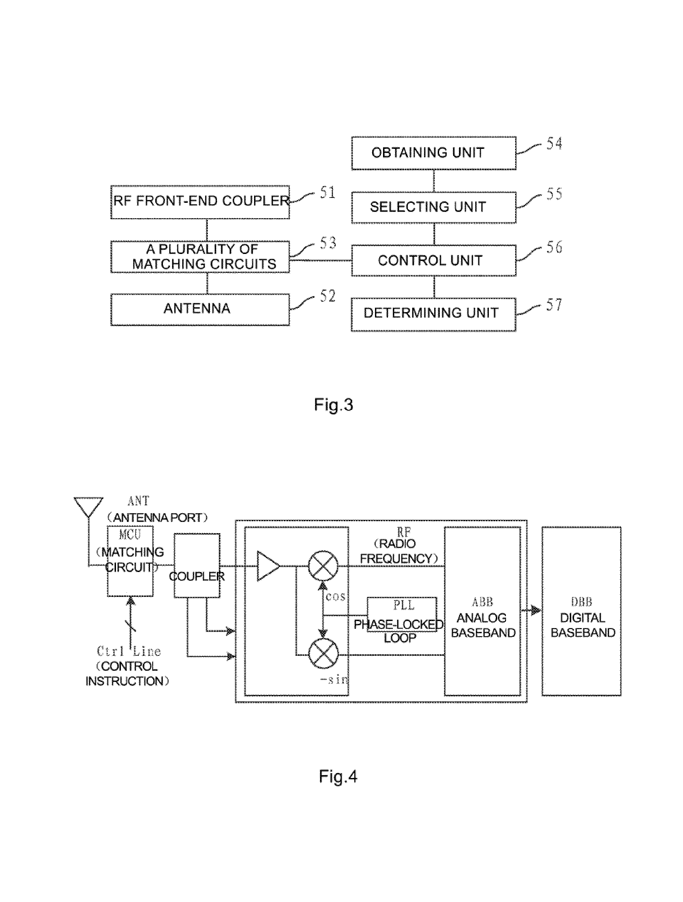

As illustrated in Fig.3, provided is a mobile terminal according to the present invention. The mobile terminal may comprise a RF front-end coupler 51 and an antenna 52. The antenna may work at different standards and different bands of a same standard; and the mobile terminal may comprise a plurality of matching circuits; and a plurality of matching circuits 53 may be provided between the RF front-end coupler 51 and the antenna 52 of the mobile terminal. The mobile terminal may further comprise:

an obtaining unit 54, being configured for obtaining working parameters of the mobile terminal;

a selecting unit 55, being configured for selecting a matching circuit from the plurality of matching circuits according to the working parameters of the mobile terminal;

a control unit 56, being configured for connecting the selected matching circuit between the RF front-end coupler and the antenna of the mobile terminal to improve the matching performance of the antenna. Different matching circuits may be composed of a plurality of matching LC arrays (inductor-capacitor arrays); and the control unit 56 may select a logic array to select different matching circuits by a logic control.

Optionally, the obtaining unit 54 may be specifically configured for: obtaining a current working band of the antenna; the selecting unit 55 may be specifically configured for: selecting a matching circuit that corresponds to the working band from the plurality of matching circuits according to the correspondence between the pre-set working band and the matching circuit.

Optionally, the mobile terminal may further comprise: a determining unit 57, being configured for determining whether the antenna of the mobile terminal is in a state of mismatching according to a first reflection coefficient value of the first matching circuit; the obtaining unit 54 may be specifically configured for: obtaining a reflection coefficient value when the mobile terminal selects a different matching circuit if the antenna is in the state of mismatching; the selecting unit 55 may be specifically configured for: selecting a matching circuit from the plurality of matching circuits, so that the second reflection coefficient value after connecting the selected matching circuit between the coupler and the antenna is the smallest one among all reflection coefficient values after respectively connecting each one of the plurality of matching circuits between the coupler and the antenna.

The determining unit 57 may comprise:

an obtaining sub-unit, being configured for obtaining a forward transmission power and a backward reflection power fed back by the coupler;

a calculating sub-unit, being configured for calculating the first reflection coefficient value according to the forward transmission power and the backward reflection power;

a determining sub-unit, being configured for determining a working state of the antenna according to the first reflection coefficient value; it is determined that the antenna is in a state of matching if the first reflection coefficient value is less than or equal to the first predetermined value, and it is determined that a connection state of the antenna is abnormal if the first reflection coefficient value is greater than or equal to a second predetermined value; wherein, the second predetermined value is greater than the first predetermined value; it is determined that the antenna is in a state of mismatching if the first reflection coefficient value is less than the second predetermined value and greater than the first predetermined value.

The present invention provides a method and apparatus which may be applied to the multi-band terminal and be capable of detecting the mismatching of the multi-band antenna and improving the mismatching performance. The present invention may be applied to a multi-band wireless system sharing one antenna, such as a mobile terminal (mobile phone), a base station, and the like.

Taking a mobile terminal as an example, on one hand, the present invention may select the best antenna matching network according to the current working band of the mobile phone (mobile terminal) to implement the best effect of antenna matching at that band. Specifically, a digital tunable matching circuit unit (MCU) may be inserted between the RF front-end antenna and the coupler. There is a plurality of matching circuits in the matching circuit unit. In the condition of normal antenna matching, an optimal matching circuit in the matching circuit unit (MCU) may be selected by a digital control word according to the current working band of the antenna and according to the pre-stored matching circuit unit.

On the other hand, the antenna of the mobile phone is very prone to generate mismatching as a variation of the external circumstance. Thus, an appropriate antenna matching network may be selected according to the detected antenna mismatching condition to correct the matching condition of the antenna, so as to achieve the optimal antenna receiving and transmitting effect. Specifically, it is determined whether the connection of the antenna is normal by determining the calculated VSWR (or according to the reflection coefficient value). By adjusting the matching circuit, the ratio of the detected backward reflection power and forward transmission power may be the smallest one, so as to achieve the optimal matching. In the condition of antenna mismatching, a suitable matching circuit in the antenna matching circuit unit (MCU) may be selected according to the detected antenna mismatching characteristics to correct the current mismatching, so as to improve the matching effect of the antenna. An antenna matching circuit unit may be inserted between the RF front end coupler and the antenna; and this unit may be configured for selecting the matching circuit of the multi-band antenna and tuning parameters in case of various mismatching.

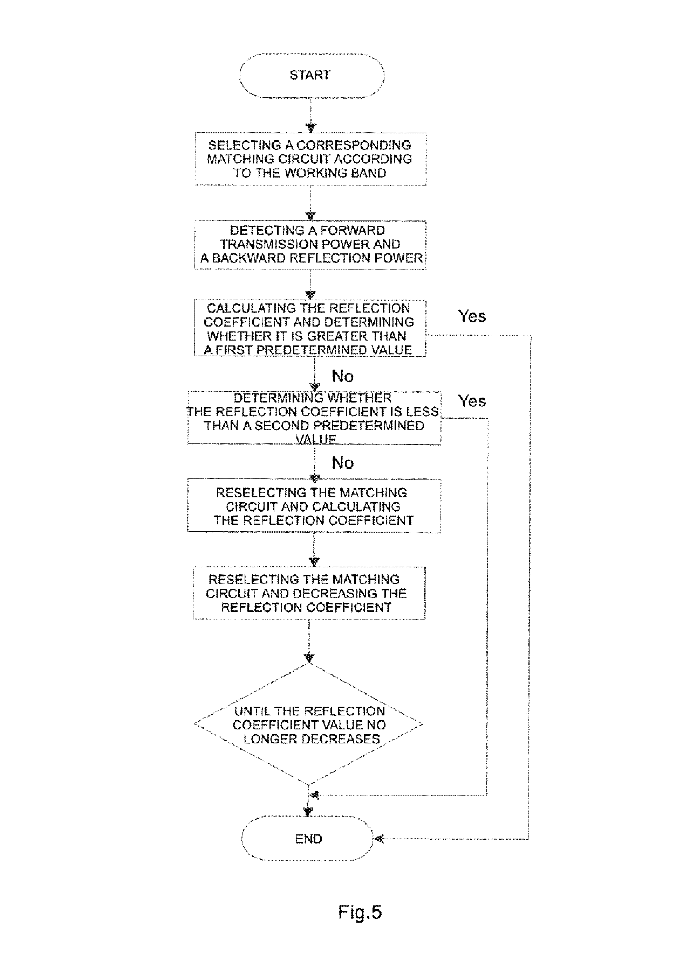

In the following, the modes for detecting the antenna mismatching and improving the mismatching performance in the present invention may be further explained by taking a TD-SCDMA/GSM terminal as an example and in connection with Fig. 4 and Fig. 5.

Firstly, an appropriate resident may be selected according to the detected signal quality when the mobile phone is turned on.

Then, a suitable antenna matching circuit may be selected according to the band of the resident network.

During the process of mobile phone communication, the antenna mismatching may be caused by a variety of reasons, such as the difference between devices, the change of the working band, the touch of the body or the fingers, and the change of the holding manner. In this case, the suitable matching circuit may be selected from the pre-stored matching circuits. The reflection coefficient S11 (i.e. a ratio between the backward reflection power being coupled back and the forward transmission power) in this condition may be calculated according the forward transmission power and the backward reflection power fed back by the coupler, and it is determined whether the antenna is in an area where the matching state is required to be adjusted.

If it is greater than or equal to the second predetermined value, it may be determined that the connection state of the antenna is abnormal, and the connection state of the antenna is required to be examined and the antenna is required to be reconnected.

If it is less than or equal to the first predetermined value, it may be determined that the matching state of the antenna is good and no adjustment is required.

If it is less than the second predetermined value and greater than the first predetermined value, it may be determined that the matching of the antenna is required to be adjusted.

For the multi-band antenna, a typical value of the VSWR (Voltage Standing Wave Ratio) is 2:1 or 3:1. Meanwhile, the impedance of the antenna may be impacted by other factors, such as the holding manner of the mobile phone (i.e., hand effect). When a user places his finger on an emitter of the antenna, the VSWR may be increased to 9:1. This is because that the antenna generates a resonant point offset when a hand is near the emitter of the antenna, and thus the resonant frequency of the antenna is changed, which leads to a serious mismatching of the antenna at a predetermined working frequency. When a port of the antenna is in the state of mismatching, the RF performance sharply declines. Meanwhile, the output power of the power amplifier increases, the power of the radiation decreases, and the current increases, which lead to shortening the battery life, the reduction of the link range, the degrade of the call quality, and the increase of the number of dropped calls.

In this case, the matching state of the antenna may be changed by selecting a different matching circuit. Here, the matching state of the antenna may be changed by selecting a different matching circuit. The values of the inductors and the values of the capacitors in each matching circuit are different, and the matching circuits may be sequenced based on the values of the inductors or the values of the capacitors in each matching circuit. If the measured reflection coefficient increases after reselecting a matching circuit, a matching circuit in a reverse direction may be selected; and if the measured reflection coefficient decreases after reselecting a matching circuit, a matching circuit in the same direction may be further selected until the reflection coefficient no longer decreases and reaches the smallest value. The system determines that it is the optimal matching state. The action for adjusting the matching state may be implemented at idle timeslots, which does not impact the normal calls.

The method embodiments correspond to the apparatus embodiments. For the portions that are not described in details in the method embodiments, it may refer to the related portions in the apparatus embodiments; and for the portions that are not described in details in the apparatus embodiments, it may refer to the corresponding portions in the method embodiments.

In each embodiment of the present invention, the sequence number of each step may not be used to limit the sequence of the steps, and for those ordinary skilled in the art, the changes of the sequence of the steps may also fall into the protection scope of the present invention without a creative effort.

The above descriptions are only preferred embodiments of the present invention. It should be noted that many modifications and changes can be made without departure from the principles of the present invention, and these modification and changes should also fall into the protection scope of the present invention.

## Claims

1. A method for improving matching performance of an antenna of a multi-band mobile terminal, wherein the mobile terminal comprises a RF (Radio Frequency) front-end coupler and an antenna; the antenna works at different standards and different bands of a same standard; the mobile terminal comprises a plurality of matching circuits; and a first matching circuit of the plurality of matching circuits is connected between the RF front-end coupler and the antenna of the mobile terminal, the method comprising:
step 1: obtaining working parameters of the mobile terminal;
step 2: selecting a matching circuit from the plurality of matching circuits according to the working parameters of the mobile terminal; and
step 3: connecting the selected matching circuit between the RF front-end coupler and the antenna of the mobile terminal to replace the first matching circuit, so as to improve the matching performance of the antenna.

2. The method for improving the matching performance of the antenna of the multi-band mobile terminal according to claim 1, wherein
the step 1 specifically comprises: obtaining a current working band of the antenna;
the step 2 specifically comprises: selecting a matching circuit that corresponds to a pre-set working band from the plurality of matching circuits according to a correspondence between the working band and the matching circuit.

3. The method for improving the matching performance of the antenna of the multi-band mobile terminal according to claim 1, wherein the method further comprises before the step 1: determining whether the antenna of the mobile terminal is in a state of mismatching according to a first reflection coefficient value of the first matching circuit;
the step 1 specifically comprises: obtaining a reflection coefficient value when the mobile terminal respectively selects each one of the plurality of matching circuits if the antenna is in the state of mismatching;
the step 2 specifically comprises: selecting a matching circuit from the plurality of matching circuits, so that a second refection coefficient value after connecting the selected matching circuit between the coupler and the antenna is smaller than a first predetermined value.

4. The method for improving the matching performance of the antenna of the multi-band mobile terminal according to claim 1, wherein the method further comprises before the step 1: determining whether the antenna of the mobile terminal is in a state of mismatching according to a first reflection coefficient value of the first matching circuit;
the step 1 specifically comprises: obtaining a reflection coefficient value when the mobile terminal respectively selects each one of the plurality of matching circuits if the antenna is in the state of mismatching;
the step 2 specifically comprises: selecting a matching circuit from the plurality of matching circuits, so that a second refection coefficient value after connecting the selected matching circuit between the coupler and the antenna is the smallest one among all reflection coefficient values after respectively connecting each one of the plurality of matching circuits between the coupler and the antenna.

5. The method for improving the matching performance of the antenna of the multi-band mobile terminal according to claim 3 or 4, wherein the step of determining whether the antenna of the mobile terminal is in the state of mismatching according to the first reflection coefficient value of the first matching circuit comprises:
obtaining a forward transmission power and a backward reflection power fed back by the coupler;
calculating the first reflection coefficient value according to the forward transmission power and the backward reflection power;
determining that the antenna is in the state of matching if the first reflection coefficient value is less than or equal to the first predetermined value;
determining that a connection state of the antenna is abnormal if the first reflection coefficient value is greater than or equal to a second predetermined value, wherein the second predetermined value is greater than the first predetermined value;
determining that the antenna is in the state of mismatching if the first reflection coefficient value is less than the second predetermined value and greater than the first predetermined value.

6. The method for improving the matching performance of the antenna of the multi-band mobile terminal according to claim 3 or 4, wherein the step of obtaining the reflection coefficient value when the mobile terminal respectively selects each one of the plurality of matching circuits if the antenna is in the state of mismatching specifically comprises:
determining whether the mobile terminal is in the state of being idle when the antenna is in the state of mismatching;
if the mobile terminal is in the state of being idle, obtaining the reflection coefficient value when the mobile terminal respectively selects each one of the plurality of matching circuits.

7. A mobile terminal, comprising a RF front-end coupler and an antenna, wherein the antenna works at different standards and different bands of a same standard; wherein the mobile terminal comprises a plurality of matching circuits, and a first matching circuit of the plurality of matching circuits is connected between the RF front-end coupler and the antenna of the mobile terminal, the mobile terminal further comprising:
an obtaining unit, being configured for obtaining working parameters of the mobile terminal;
a selecting unit, being configured for selecting a matching circuit from the plurality of matching circuits according to the working parameters of the mobile terminal; and
a control unit, being configured for connecting the selected matching circuit between the RF front-end coupler and the antenna of the mobile terminal to replace the first matching circuit, so as to improve matching performance of the antenna.

8. The mobile terminal according to claim 7, wherein
the obtaining unit is specifically configured for obtaining a current working band of the antenna;
the selecting unit is specifically configured for selecting a matching circuit that corresponds to a pre-set working band from the plurality of matching circuits according to a correspondence between the working band and the matching circuit.

9. The mobile terminal according to claim 7, further comprising:
a determining unit, being configured for determining whether the antenna of the mobile terminal is in a state of mismatching according to a first reflection coefficient value of the first matching circuit; wherein
the obtaining unit is specifically configured for obtaining a reflection coefficient value when the mobile terminal selects a different matching circuit if the antenna is in the state of mismatching;
the selecting unit is specifically configured for selecting a matching circuit from the plurality of matching circuits, so that a second reflection coefficient value after connecting the selected matching circuit between the coupler and the antenna is the smallest one among all reflection coefficient values after respectively connecting each one of the plurality of matching circuits between the coupler and the antenna.

10. The mobile terminal according to claim 9, wherein the determining unit comprises:
an obtaining sub-unit, being configured for obtaining a forward transmission power and a backward reflection power fed back by the coupler;
a calculating sub-unit, being configured for calculating the first reflection coefficient value according to the forward transmission power and the backward reflection power;
a determining sub-unit, being configured for determining that the antenna is in the state of matching if the first reflection coefficient value is less than or equal to the first predetermined value; determining that a connection state of the antenna is abnormal if the first reflection coefficient value is greater than or equal to a second predetermined value, wherein the second predetermined value is greater than the first predetermined value; determining that the antenna is in the state of mismatching if the first reflection coefficient value is less than the second predetermined value and greater than the first predetermined value.
